Europäisches Patentamt

European Patent Office

Office européen des brevets

(19)

(11) Numéro de publication: **0 268 540 B1**

## FASCICULE DE BREVET EUROPEEN

(12)

(45) Date de publication de fascicule du brevet:
**31.07.91**

(51) Int. Cl.⁵: **A01B 19/06**

(21) Numéro de dépôt: **87440068.2**

(22) Date de dépôt: **21.10.87**

(54) **Machine de travail du sol.**

(30) Priorité: **22.10.86 FR 8614767**

(43) Date de publication de la demande:
**25.05.88 Bulletin 88/21**

(45) Mention de la délivrance du brevet:
**31.07.91 Bulletin 91/31**

(84) Etats contractants désignés:
**AT BE CH DE ES GB IT LI NL**

(56) Documents cités:
**EP-A- 0 015 881**
**DE-A- 1 557 843**
**FR-A- 2 367 412**
**NL-A- 6 805 709**

(73) Titulaire: **KUHN S.A.**
**4, Impasse des Fabriques**
**F-67700 Saverne(FR)**

(72) Inventeur: **Oberle, Edmond**
**11, rue de Thal**
**Haegen F-67700 Saverne(FR)**
Inventeur: **Klein, Jean**
**19, rue du Herrenstein**
**Dossenheim Sur Zinsel F-67330**
**Bouxwiller(FR)**

## Description

L'invention décrite ci-après concerne une machine de travail du sol comportant d'une part un châssis muni d'un dispositif d'attelage à un véhicule moteur, châssis auquel sont liées par une pluralité de bras oscillants deux rangées comportant chacune deux barres munies d'outils, lesdites barres étant au moins sensiblement alignées et à mouvements opposés, lesdites rangées étant, compte tenu du sens d'avance au travail, disposées l'une derrière l'autre et transversalement à la direction d'avance au travail, et d'autre part un mécanisme de transformation du mouvement rotatif reçu d'une source motrice en un mouvement de va-et-vient transversal à la direction d'avance au travail, comportant un dispositif à bielles-excentriques, chaque bielle servant à transmettre le mouvement de va-et-vient à la barre correspondante à laquelle elle est liée directement ou indirectement par une de ses extrémités, chaque bras oscillant étant lié au châssis au moyen d'une articulation supérieure et à la barre correspondante au moyen d'une articulation inférieure.

Une telle machine de travail du sol est décrite dans la EP-A-0 015 881. Celle-ci comporte deux rangées de deux barres chacune. Les barres d'une même rangée sont sensiblement alignées dans une direction transversale à la direction d'avance au travail et sont animées de mouvements opposés grâce à un mécanisme très intéressant, transformant un mouvement rotatif en un mouvement de va-et-vient transversal à la direction d'avance au travail. Chaque barre est liée au châssis au moyen de deux bras oscillants. Les bras oscillants correspondants de deux barres, s'étendant l'une derrière l'autre, sont montés alignés l'un par rapport à l'autre dans la direction d'avance au travail. Comme l'articulation supérieure, par l'intermédiaire de laquelle chaque bras oscillant est lié au châssis, doit avoir une longueur relativement importante pour encaisser les efforts qui apparaissent lors du travail, il en découle que la largeur du châssis est, dans la direction d'avance au travail, très importante.

Ceci est gênant à plusieurs égards. En effet, une telle machine de travail du sol est destinée à la préparation des lits de semences et est, de ce fait, généralement équipée d'un rouleau qui s'étend derrière la rangée arrière de barres dans le but, notamment, de parfaire la structure du sol après le passage des outils qui équipent les barres. Or, ces rouleaux sont en général, de par leur configuration spéciale, relativement lourds. Il en découle que le centre de gravité de l'ensemble machine-rouleau est situé relativement loin derrière le dispositif d'attelage du véhicule moteur auquel est lié la machine pendant le travail. Ceci entraîne non seulement des sollicitations très importantes tant sur le dispositif d'attelage de la machine que sur celui du véhicule moteur, mais engendre en sus de sérieux problèmes de maniabilité dudit véhicule moteur, car les roues avant de celui-ci sont fortement délestées. Ce problème est d'ailleurs encore aggravé si la machine de travail du sol est, en sus, équipée d'un semoir afin d'ensemencer le lit de semences directement après sa préparation. De cette sorte, la machine connue doit, en général, être liée à des véhicules moteur de forte puissance uniquement pour bénéficier d'une capacité de relevage suffisante, alors que cette forte puissance n'est nullement justifiée pour le travail du sol en lui-même. Il en découle donc que le travail de préparation de lits de semences (et, le cas échéant, d'ensemencement) ne peut souvent pas être réalisé de manière économique. Du reste, ces gros véhicules moteur sont lourds et tassent donc inutilement les sols en dégradant leur structure.

Dans la NL-A-68 05 709 est décrite une machine de travail du sol comportant un châssis muni d'un dispositif d'attelage à un véhicule moteur, et un mécanisme de transformation d'un mouvement rotatif en un mouvement de va-et-vient transversal à la direction d'avance au travail comportant un dispositif à bielles-excentriques. A ce châssis sont liées quatre rangées d'une seule barre chacune, qui s'étendent l'une derrière l'autre, compte tenu de la direction d'avance au travail, et transversalement par rapport à ladite direction. La première et la troisième barre sont liées rigidement l'une à l'autre au moyen de traverses et forment une première paire de barres. De même, la deuxième et la quatrième barre sont également liées rigidement l'une à l'autre au moyen de traverses et forment une deuxième paire de barres. Chaque paire de barres est mise en mouvement par une bielle respective du dispositif à bielles-excentriques, de telle sorte qu'elles soient animées de mouvements opposés. Chaque paire de barres est liée au châssis de la machine par un bras de liaison prévu à chaque extrémité du châssis. A chaque extrémité du châssis, il y a donc une paire de bras de liaison. Dans chaque paire de bras de liaison, les fixations supérieures par l'intermédiaire desquelles lesdits bras de liaison sont fixés au châssis, s'étendent l'une à côté de l'autre, machine vue suivant la direction d'avance au travail. De même, les fixations inférieures des bras de liaison de ladite paire de bras de liaison, par l'intermédiaire desquelles ceux-ci sont fixés à la paire de barres respectives, s'étendent également l'une à côté de l'autre, machine vue suivant la direction d'avance au travail. Il apparaît enfin que chaque bras de liaison est fixé rigidement sur le châssis et sur la paire de barres respective. Le déplacement transversal des barres n'est possible que grâce à la déformation des bras de liaison respectifs qui comportent chacun deux fers plats croisés, probablement en acier à ressort.

Dans la DE-A-1 557 843 est décrite une machine de travail du sol comprenant un châssis et un mécanisme de transformation d'un mouvement rotatif en un mouvement de va-et-vient transversal à la direction d'avance au travail comportant un dispositif à bielles-excentriques. A ce châssis sont liées quatre rangées d'une seule barre chacune, qui s'étendent l'une derrière l'autre compte tenu de la direction d'avance au travail et transversalement par rapport à ladite direction. La première et la troisième barre sont liées rigidement l'une à l'autre et forment une première paire de barres. De même, la deuxième et la quatrième barre sont également liées rigidement l'une à l'autre et forment une deuxième paire de barres. Chaque paire de barres est mise en mouvement par une bielle respective du dispositif à bielles-excentriques, de telle sorte qu'elles soient animées de mouvements opposés. Chaque paire de barres est liée au châssis de la machine par un bras oscillant prévu à chaque extrémité du châssis. A chaque extrémité du châssis, il y a donc une paire de bras oscillants. Dans chaque paire de bras oscillants, les articulations supérieures par l'intermédiaire desquelles lesdits bras oscillants sont liés au châssis, sont agencées de telle manière que leurs axes géométriques soient confondus. Ceci entraîne une forme assez complexe des bras oscillants adjacents qui doivent passer l'un dans l'autre.

Le but de la présente invention est de modifier la construction de la machine de travail du sol décrite dans la EP-A-0 015 881, afin de réduire la largeur du châssis dans la direction d'avance au travail, tout en permettant aux articulations supérieures des bras oscillants d'avoir une longueur suffisante leur permettant de résister aux sollicitations engendrées durant le travail et sans pour autant complexifier sa construction.

A cet effet, la machine de travail du sol telle que décrite dans le préambule de la revendication 1 est caractérisée par le fait que les articulations supérieures d'au moins une paire de bras oscillants correspondants de deux barres respectives sur des rangées différentes s'étendent l'une à côté de l'autre, machine vue suivant la direction d'avance au travail, et que le bras oscillant de ladite paire, lié à une barre de la rangée arrière, a son articulation inférieure décalée vers l'arrière par rapport à son articulation supérieure, tandis que le bras oscillant de ladite paire, lié à une barre de la rangée avant, a son articulation inférieure décalée vers l'avant par rapport à son articulation supérieure.

Grâce à cet agencement, la largeur du châssis peut, à longueur égale des articulations supérieures des bras oscillants, être substantiellement réduite dans la direction d'avance au travail. Le centre de gravité de la machine s'étend ainsi plus près du dispositif d'attelage du véhicule moteur, ce qui autorise, à poids égal de la machine, d'utiliser un véhicule moteur de puissance et de poids plus faibles avec tous les avantages qui en découlent.

Selon une caractéristique supplémentaire de l'invention, lesdites articulations supérieures d'au moins une paire de bras oscillants correspondants de deux barres respectives sur des rangées différentes s'étendent dans le voisinage l'une de l'autre.

Selon une autre caractéristique supplémentaire de l'invention, au moins une paire de bras oscillants correspondants de deux barres respectives sur des rangées différentes s'étendant l'un à côté de l'autre, machine vue suivant la direction d'avance au travail.

Selon une autre caractéristique supplémentaire de l'invention, les bras oscillants d'une même barre sont relativement éloignés l'un de l'autre.

Selon une autre caractéristique supplémentaire de l'invention, les âmes des bras oscillants de ladite paire apparaissent, en vue de côté, comme sécantes à leur partie supérieure.

Avantageusement, le point d'intersection inférieur apparent des âmes des bras oscillants de ladite paire est situé le plus haut possible par rapport aux barres. Ceci permet d'éviter, dans une grande mesure, le coincement de pierres entre ces bras oscillants qui ont un mouvement pendulaire transversal à la direction d'avance au travail.

Préférentiellement, l'âme des bras oscillants de ladite paire est plus large dans sa partie supérieure que dans sa partie inférieure.

Dans l'invention, le châssis peut être disposé plus haut ou plus bas que les articulations supérieures des bras oscillants.

Préférentiellement, le châssis sera situé plus bas que les articulations supérieures des bras oscillants, ce qui diminuera l'encombrement en hauteur de la machine.

Selon une autre caractéristique supplémentaire de l'invention, la largeur du châssis, considéré dans la direction d'avance au travail, est sensiblement égale à la distance mesurée dans la direction d'avance au travail, entre les extrémités extérieures des articulations inférieures des bras oscillants de ladite paire.

Le châssis de la machine de travail du sol sera avantageusement constitué de deux poutres. Dans ce cas, lorsqu'il s'étendra également plus bas que les articulations supérieures des bras oscillants, lesdits bras oscillants passeront, de préférence, entre les deux poutres.

Selon une autre caractéristique supplémentaire de l'invention, la largeur de l'articulation supérieure de chaque bras oscillant de ladite paire est sensiblement égale à la distance mesurée dans la direction d'avance au travail entre les extrémités extérieures des articulations inférieures des bras oscillants de ladite paire.

Selon une autre caractéristique supplémentaire de l'invention, il est prévu que l'articulation supérieure et l'articulation inférieure de chaque bras oscillant de ladite paire comportent au moins un palier élastique.

Dans une réalisation particulièrement avantageuse, l'articulation supérieure d'un bras oscillant comporte un axe solidaire du châssis, qui traverse au moins un palier élastique constitué d'un tube intérieur et d'un tube extérieur liés entre eux par un cylindre élastique, ledit tube intérieur étant monté serré sur l'axe et ledit tube extérieur étant monté serré dans un organe tubulaire supérieur du bras oscillant, tandis que l'articulation inférieure dudit bras oscillant comporte un axe solidaire de la barre correspondante, qui traverse au moins un palier élastique constitué d'un tube intérieur et d'un tube extérieur liés entre eux par un cylindre élastique, ledit tube intérieur étant monté serré sur l'axe et ledit tube extérieur étant monté serré dans un organe tubulaire inférieur du bras oscillant.

Avantageusement également, l'articulation supérieure et l'articulation inférieure de chaque bras oscillant de la paire comportent chacune deux paliers élastiques montés chacun près d'une extrémité de l'organe tubulaire supérieur, respectivement de l'organe tubulaire inférieur dudit bras oscillant.

Selon une autre caractéristique supplémentaire de l'invention, le châssis est muni d'un capot qui, en vue de dessus, couvre totalement ou partiellement lesdites articulations supérieures des bras oscillants et, éventuellement, ledit dispositif à bielles-excentriques.

D'autres caractéristiques de l'invention sont contenues dans les autres sous-revendications et dans la description ci-dessous de deux exemples non-limitatifs de réalisation de l'invention, en se référant au dessin annexé sur lequel :

- La figure 1 représente une vue de derrière d'un premier exemple de réalisation d'une machine de travail du sol selon l'invention, à laquelle on a enlevé les rouleaux avant et arrière pour une meilleure clarté,
- La figure 2 représente une vue de dessus de la machine de travail du sol de la figure 1 avec une vision partielle du capotage,
- La figure 3 représente une vue de côté de la machine des figures 1 et 2; équipée en sus d'un attelage arrière,
- La figure 4 représente une vue de côté d'un deuxième exemple de réalisation d'une machine de travail du sol selon l'invention également équipée d'un attelage arrière,
- La figure 5 représente à une échelle plus grande une vue de côté partielle, en coupe suivant le plan V - V de la figure 2, de deux bras oscillants montés côte à côte, et
- La figure 6 représente une vue de face partielle et en coupe suivant le plan VI - VI de la figure 3, du dispositif à bielles-excentriques.

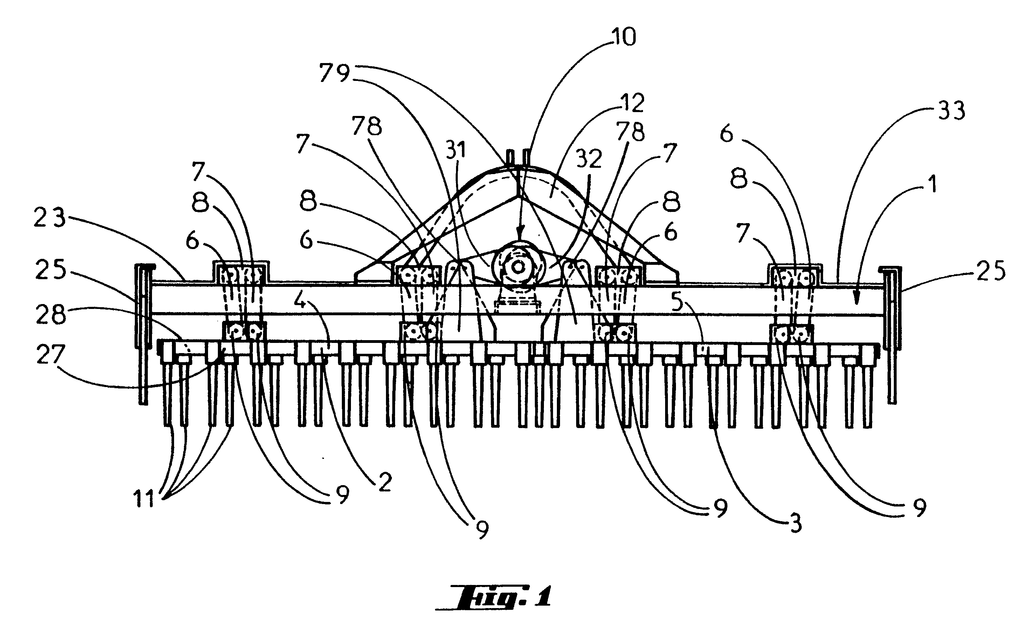

Sur la figure 1, on voit une machine de travail ou sol selon la présente invention. Ladite machine est constituée d'un châssis (1) auquel sont liées des barres (2, 3, 4, 5) au moyen de bras oscillants (6, 7) articulés à l'une de leurs extrémités dans des chapes (8) solidaires dudit châssis (1) et à l'autre de leurs extrémités dans des chapes (9) solidaires des barres (2, 3, 4, 5) respectives. Les bras oscillants (6, 7) seront décrits plus en détail ultérieurement.

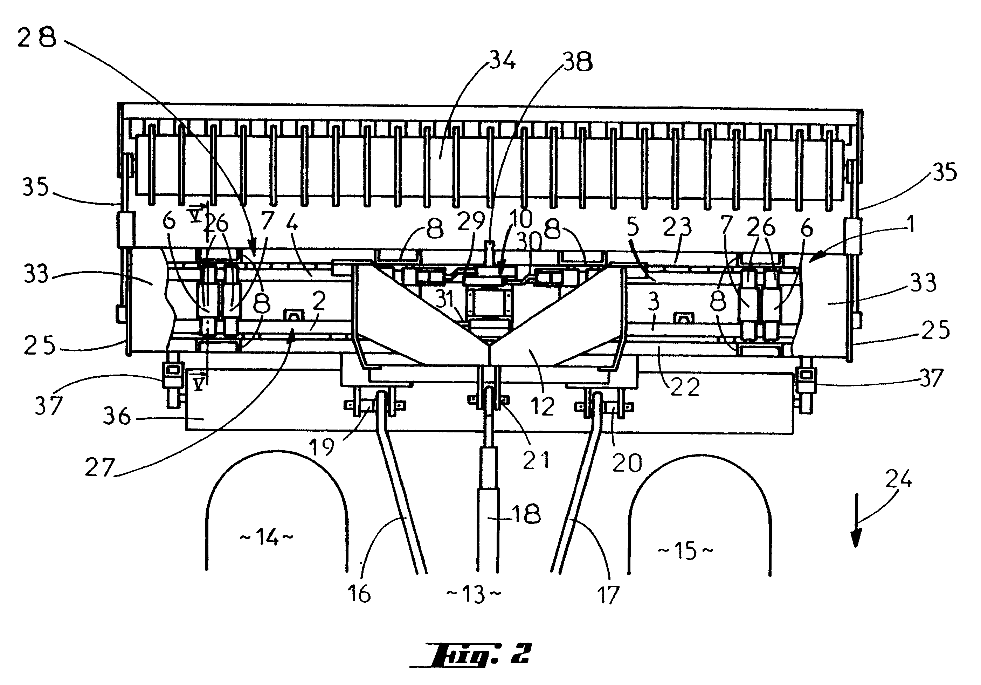

Ces barres (2, 3, 4, 5) sont animées d'un mouvement de va-et-vient alternatif transversalement à la direction d'avance (24) au travail (voir figures 2-5) par un dispositif à bielles-excentriques (10).

Le dispositif à bielles-excentriques (10) sera décrit plus en detail ultérieurement.

Chaque barre (2, 3, 4, 5) est munie d'un certain nombre d'outils de travail, tels que par exemple des dents (11) fixées de manière démontable sur les barres (2, 3, 4, 5). Ces dents (11) sont dirigées à partir desdites barres (2, 3, 4, 5), du haut vers le bas.

Du reste, la machine est aussi équipée d'un dispositif d'attelage (12) permettant de la fixer par exemple au dispositif d'attelage trois points d'un véhicule tracteur (13) (représenté partiellement dans la figure 2).

Dans la figure 2, on voit les roues arrière (14, 15) du véhicule tracteur (13) et son dispositif d'attelage à trois points composé, de façon connue, de deux bras inférieurs (16, 17) et d'une bielle supérieure (18).

Le dispositif d'attelage (12) de la machine, quant à lui, comporte deux points d'attelage inférieurs (19, 20), destinés à être liés aux deux bras inférieurs (16, 17), et un point d'attelage supérieur (21) destine à être lié à la bielle supérieure (18).

Dans cette vue, on remarque clairement que le châssis (1) est constitué de deux poutres (22, 23) sensiblement parallèles et s'étendant transversalement à la direction d'avance (24) au travail. A chacune de leurs extrémités, les deux poutres (22, 23) sont liées entre-elles par une plaque latérale (25) de manière à former un ensemble rigide.

Sur la face supérieure desdites poutres (22, 23) sont fixées les chapes (8), de telle sorte que les articulations supérieures des bras oscillants (6, 7) s'étendent à un niveau supérieur à celui des poutres (22, 23).

A partir de ces articulations supérieures, les bras oscillants (6, 7) s'étendent vers le bas en traversant l'espace situé entre les deux poutres (22, 23) pour rejoindre leur barre à dents respective (2, 3, 4, 5).

On voit également dans cette figure la disposition des barres à dents (2, 3, 4, 5) en deux rangées (27, 28) transversalement à la direction d'avance (24) au travail. Dans cette exemple, on voit que les rangées (27, 28) de barres à dents (2, 3, 4, 5) s'étendent sensiblement parallèlement entre-elles et sensiblement parallèlement aux poutres (22, 23) du châssis (1). On voit en sus que la distance entre les deux rangées (27, 28), mesurée dans la direction d'avance (24) au travail, est inférieure à la distance entre les deux poutres (22, 23) du châssis (1).

On voit aussi dans cette figure, le dispositif à bielles-excentriques (10) avec les bielles (29, 30, 31, 32) et on y remarque également que ledit dispositif à bielles-excentriques (10) ainsi que les bras oscillants (6, 7) s'étendent, en vue de dessus, dans l'espace délimité par les deux poutres (22, 23) formant le châssis (1).

Sur ce châssis (1) est assujetti un capot (33) (vu partiellement aux extrémités de la machine) afin de protéger l'utilisateur des organes en mouvement. Ladite machine de travail du sol, représentée dans cette vue, est équipée d'un rouleau de nivellement arrière (34) connu de l'homme de l'art. Ce rouleau est lie ce manière articulée sur l e châssis (1) de la machine à l'aide de bras (35) liés à leur extrémité frontale aux plaques (25) à l'aide d'une articulation d'axe dirigé transversalement à la direction d'avance (24) au travail. La largeur du rouleau (34) est sensiblement égale à la largeur de travail des rangées (27, 28) de barres à dents (2, 3, 4, 5).

A l'avant de la machine s'étend un rouleau de soutien et de nivellement (36). Ce rouleau est lié au châssis (1) de la machine par un dispositif de liaison (37) permettant de régler la hauteur dudit rouleau (36) par rapport aux barres à dents (2, 3, 4, 5). La largeur de ce rouleau est au moins égale à la voie des roues arrière (14, 15) du véhicule tracteur (13).

On observe aussi un bout d'arbre (38) dépassant à l'arrière du dispositif à bielles-excentriques (10), qui est destiné à animer, le cas échéant, un dispositif accessoire additionnel à la machine, mais non représenté.

Dans cet exemple de réalisation, on remarque aussi que les bras oscillants (6, 7) sont groupés par paires. Ces paires sont constituées d'un bras oscillant (6) et d'un bras oscillant (7) et, dans chacune de ces paires, les articulations supérieures solidaires de ces bras oscillants (6, 7) sont les plus proches possible l'une de l'autre.

De plus, toujours dans cet exemple, les bras oscillants (6, 7), associés à une même barre à dents (2, 3, 4, 5), sont le plus loin possible l'un de l'autre.

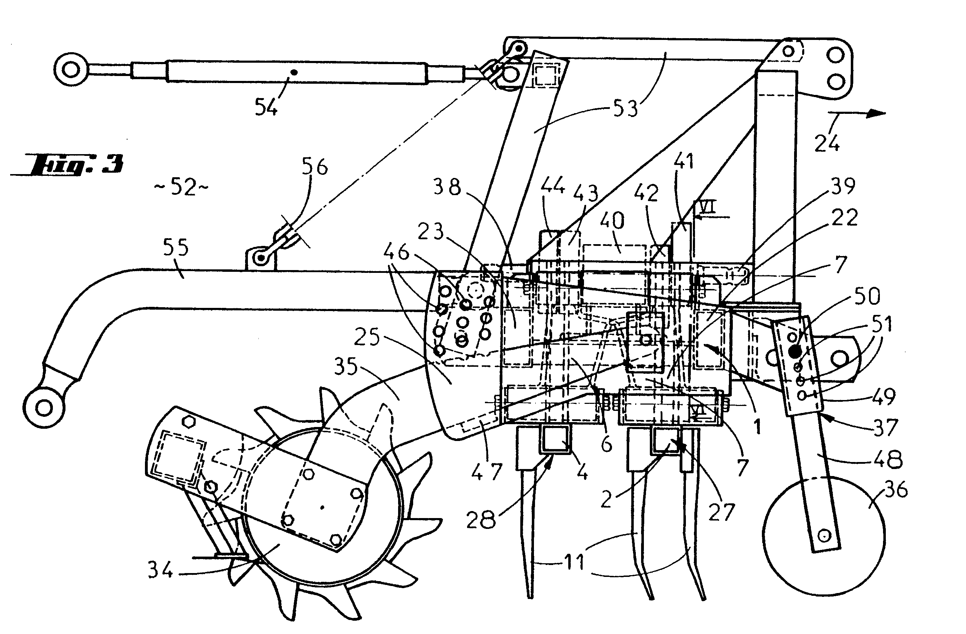

Sur la figure 3, on voit la machine de travail du sol des figures 1 et 2 selon l'invention, en vue de côté. On distingue sur cette figure l'arbre d'entrée (39) du dispositif à bielles-excentriques (10) qui reçoit le mouvement de rotation du véhicule tracteur (13) (figure 2) à l'aide d'un arbre à joints universels non réprésenté. Cet arbre (39) est guidé en rotation par un palier (40) fixé sur le châssis (1).

A l'avant de ce palier (40), l'arbre d'entrée (39) supporte les excentriques (41, 42) associés aux barres à dents (3, 2) de la rangée frontale (27), tandis qu'à l'arrière dudit palier (40), l'arbre d'entrée (39) supporte les deux excentriques (43, 44) associés aux barres à dents (5, 4) de la rangée arrière (28). A l'arrière, l'arbre d'entrée (39) se prolonge par le bout d'arbre (38) décrit plus haut. On retrouve dans cette vue les deux poutres (22, 23) formant le châssis (1) de ladite machine, de même qu'un bras oscillant (7) lié à une barre à dents (2 ou 3) de la rangée frontale (27) ainsi qu'un bras oscillant (6) lié à une barre à dents (4 ou 5) de la rangée arrière (28). Comme décrit précédemment, cette figure montre la manière selon laquelle les bras oscillants (6, 7) traversent l'espace s'étendant entre les deux poutres (22, 23) du châssis (1).

Sur les barres à dents (2, 3) de la rangée frontale (27), les dents (11) sont montées alternativement à l'avant et à l'arrière desdites barres à dents (2, 3). Par contre, sur les barre à dents (4, 5) de la rangée arrière (28), toutes les dents (11) sont montées à l'arrière desdites barres à dents (4, 5).

On retrouve dans cette vue le rouleau de nivellement arrière (34) ainsi que les bras (35) liant ce rouleau aux plaques latérales (25) du châssis (1). Sur la partie arrière haute des plaques latérales (25) du châssis (1), sont aménagés un certain nombre de trous (46), tandis qu'à leur partie arrière basse est ammènagée une butée (47).

Ladite machine de travail du sol y est aussi représentée équipée du rouleau frontal (36). Le dispositif de liaison (37) du rouleau frontal (36) sur le châssis (1) de la machine est constitué par un bras (48) s'étendant à chaque extrémité du rouleau (36) et d'un fourreau (49) respectif, solidaire dudit châssis (1). Le rouleau (36) est guidé en rotation à l'extrémité inférieure desdits bras (48). L'extrémité supérieure desdits bras (48) est introduite dans son fourreau (49) respectif et y est maintenue axialement au moyen d'une broche (50) collaborant avec un des trous (51) dudit fourreau (49).

Dans cette vue, on a en sus représenté un attelage arrière (52) permettant l'adjonction d'un dispositif accessoire à l'arrière de ladite machine. Cet attelage arrière est constitué d'une part d'un cadre (53) monté de façon rigide sur la machine de travail du sol et d'autre part d'une bielle (54) fixée de manière articulée sur la partie supérieure de ce cadre (53) et de deux bras inférieurs (55) également fixés de manière articulée sur le cadre (53). Le débattement de ces bras inférieurs (55) est limité vers le bas au moyen d'une chaîne (56), fixée aux bras inférieurs (55) et au cadre (53).

A leur partie arrière, la bielle (54) et les bras inférieurs (55) forment ainsi un système d'attelage à trois points.

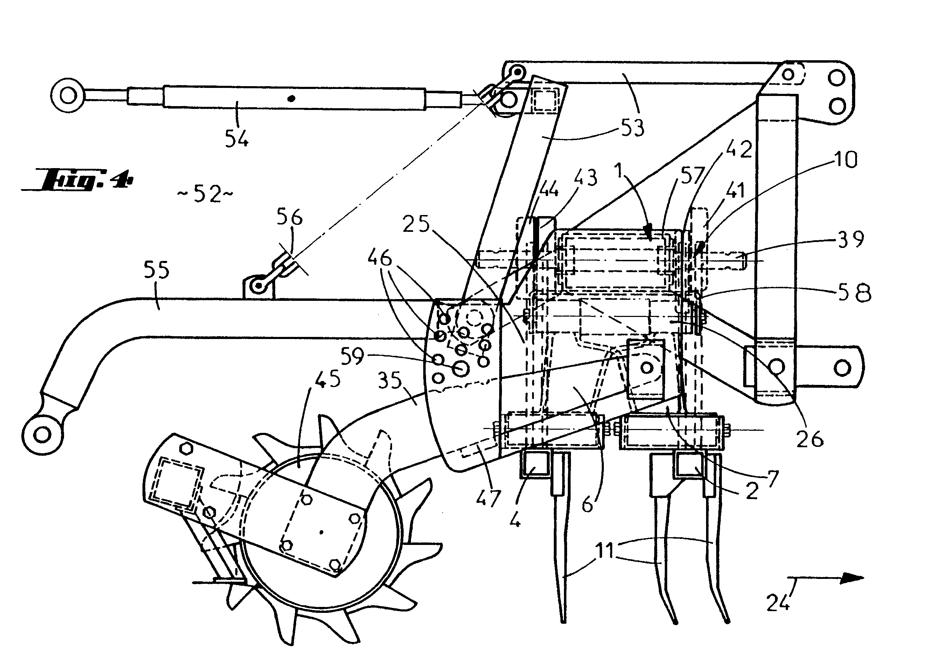

Sur la figure 4, distinctivement de la figure 3, on peut voir que le châssis (1) de la machine de travail du sol est constitué d'une seule poutre (57) située au-dessus des articulations supérieures des bras oscillants (6, 7). Les chapes (58) servant à lier les articulations supérieures des bras oscillants (6, 7) au châssis (1), sont fixées sur la face inférieure de ladite poutre (57) et sont ouvertes vers le bas.

Dans cette vue, les dents (11) des barres à dents arrière (4, 5) sont montées à l'avant desdites barres à dents (4, 5). On note toutefois que la distance, séparant les dents (11) arrière des barres à dents frontales (2, 3) et les dents (11) des barres à dents arrière (4, 5), reste sensiblement la même que dans l'exemple des figures 1 à 3. La poutre (57) sert également de palier à l'arbre d'entrée (39) dudit dispositif à biellesexcentriques (10). A l'avant de la poutre (57) sont fixés sur l'arbre d'entrée (39), les excentriques (41, 42) associés aux barres à dents frontales (3, 2), tandis qu'à l'arrière de ladite poutre (57) s'étendent les excentriques (43, 44) associés aux barres à dents arrière (5, 4).

Dans cet exemple de réalisation, il n'est pas prévu de rouleau frontal de soutien et de nivellement, la profondeur de travail des dents (11) de cette machine étant déterminée par le rouleau arrière (45) qui remplit aussi une fonction de soutien. A cet effet. la poutre (57) comporte à chacune de ses extrémités une plaque latérale (25). Tout comme dans l'exemple précédent, le rouleau arrière (45) est lié de manière articulée aux plaques latérales (25) au moyen de deux bras (35). Ces plaques latérales (25) comportent, comme décrit précédemment, dans leur partie arrière supérieure des trous (46) et dans leur partie inférieure une butée (47). Une broche (59), enfoncée dans un des trous (46) de chaque plaque latérale (25), coopère avec le bras (35) respectif du rouleau (45) pour limiter le débattement de celui-ci vers le haut.

Tous les éléments de la machine de la figure 4 communs à la machine représentée dans les figures 1 à 3 n'ont pas été redécrits.

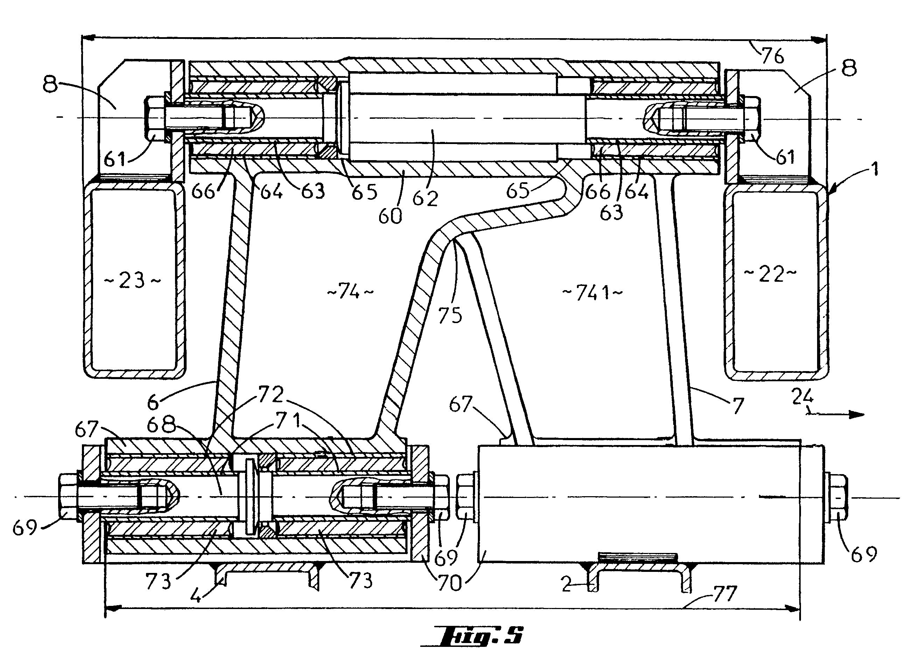

Sur la figure 5, on voit totalement en coupe un des-bras oscillants (6) lié à une barre à dents arrière (4, 5) et, en arrière-plan, partiellement occulté, un des bras oscillants (7) lié à une des barres à dents avant (2, 3). On remarque sur cette figure que l'articulation supérieure des bras oscillants (6, 7) (ici celle du bras oscillant (6)) occupe sensiblement toute la place disponible entre les deux poutres (22, 23) du châssis (1). On voit également que les chapes (8) sont situées au-dessus des poutres (22, 23). Ceci permet notamment d'économiser en hauteur l'encombrement de ces poutres (22, 23).

L'articulation supérieure du bras oscillant (6) comporte un axe (62) lié par des moyens de fixation (61) aux demi-chapes constituant la chape (8) solidaires du châssis (1).

Ledit axe (62) est lié à l'organe tubulaire (60) par un palier élastique à chacune de ses extrémités. Chaque palier élastique est constitué d'un tube intérieur (63) monté serré sur l'axe (62) et d'un tube extérieur (64) monté serré dans un des alésages (65) pratiqués, à cet effet, à chaque extrémité de l'organe tubulaire (60). Le tube intérieur (63) est lié au tube extérieur (64) par un cylindre élastique (66). Ce palier élastique permet une certaine rotation du bras oscillant (6) autour de l'axe (62).

De même, l'articulation inférieure du bras oscillant (6) comporte un axe (68) lié par des moyens de liaison (69) à une chape (9) solidaire d'une barre à dents (4, 5). Ledit axe (68) est lié à l'organe tubulaire (67) par un palier élastique à chacune de ses extrémités. Lesdits paliers élastiques sont respectivement constitués d'un tube intérieur (71) monté serré sur l'axe (68) et d'un tube extérieur (72) monté serré dans l'organe tubulaire (67). Chaque tube intérieur (71) est lié à son tube extérieur respectif (72) par un cylindre élastique (73) autorisant également une certaine rotation du bras oscillant (6) autour de l'axe (68).

Bien que cela ne soit pas représenté, on comprendra que les articulations supérieure et inferieure d'un bras oscillant (7) sont identiques à celles d'un bras oscillant (6).

Dans cette vue, on voit aussi clairement la forme des bras oscillants (6, 7). Un bras oscillant arrière (6) a son organe tubulaire inférieur (67) déporté vers l'arrière par rapport à son organe tubulaire supérieur (60) afin de pouvoir être lié à une des barres à dents arrière (4, 5). A cet effet, l'organe tubulaire supérieur (60) et l'organe tubulaire inférieur (67) d'un même bras oscillant arrière (6) sont liés entre eux par une âme (74) s'étendant vers l'arrière et vers le bas. En sus, on voit que cette âme (74) est plus large dans sa partie supérieure que dans sa partie inférieure. On voit également que la liaison de l'âme (74) sur l'organe tubulaire supérieur (60) est sensiblement centrée par rapport audit organe tubulaire supérieur (60). Un bras oscillant avant (7) par contre, destiné à être lié à une barre à dents avant (2, 3), a son organe tubulaire inférieur (67) déporté vers l'avant par rapport à son organe tubulaire supérieur (60) afin de pouvoir être lié à une des barres à dents avant (2, 3). A cet effet, l'organe tubulaire supérieur (60) et l'organe tubulaire inférieur (67) d'un même bras oscillant (7) sont liés entre eux par une âme (741) s'étendant vers l'avant et vers le bas. Dans sa partie supérieure, l'âme (741) est également plus large que dans sa partie inférieure. De même, la liaison de l'âme (741) à l'organe tubulaire supérieur (60) est également sensiblement centrée par rapport au dit organe tubulaire supérieur (60).

De plus, sur cette figure, on peut voir que les âmes (74, 741) des bras oscillants (6, 7) apparaissent comme sécantes. Afin de diminuer au maximum les risques de coïncement de pierres ou autres corps durs entre deux bras oscillants (6, 7) situés côte à côte, le point d'intersection (75) est situé le plus haut possible par rapport aux barres à dents (2, 3, 4, 5).

On voit encore sur la figure 5 que la largeur (76), mesurée dans la direction d'avance (24) au travail entre les deux poutres (22, 23) du châssis (1), est sensiblement égale à la distance (77) mesurée dans la direction d'avance (24) au travail entre les extrémités extérieures des organes tubulaires inférieurs (67) des bras oscillants (6, 7).

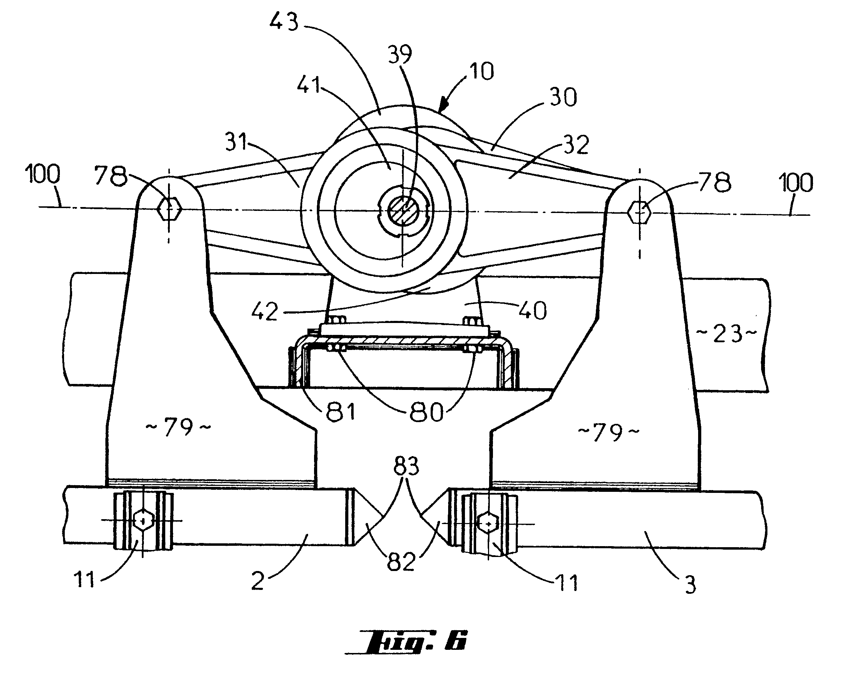

Sur la figure 6, on voit de face, en gros plan, le dispositif à bielles excentriques (10) qui anime les barres à dents (3, 2, 5, 4). Comme dit plus haut, le mouvement rotatif de la prise de force du véhicule tracteur (13) (figure 2) est transmis par un arbre de transmission à joints universels (non représenté) à l'arbre d'entrée (39). Sur cet arbre d'entrée (39) sont montés les excentriques (41, 42, 43, 44). Ces excentriques (41, 42, 43, 44) coopèrent respectivement avec des bielles (32, 31, 30, 29) afin de transformer le mouvement de rotation de l'arbre d'entrée (39) en un mouvement de va-et-vient alternatif transmis par le pied de ces bielles (32, 31, 30, 29) à leur barre à dents respective (3, 2, 5, 4). Les pieds de ces bielles (32, 31, 30, 29) sont liés, comme il est. montré dans cette figure 6, par des articulations (78) à des chapes (79), elles-mêmes solidaires de leur barre à dents (3, 2, 5, 4) respective. Ces bielles (32, 31, 30, 29) présentent un plan de symétrie (100) contenant l'axe de leur articulation (78) correspondante. Les chapes (79) s étendent à l'extrémité intérieure des barres à dents (3, 2, 5, 4) desquelles elles sont solidaires.

Pour une bonne transmission du mouvement d'entrainement des barres à dents (3, 2, 5, 4), les articulations (78) des bielles (32, 31, 30, 29) sur les chapes (79) correspondantes sont situées à une certaine hauteur par rapport aux barres à dents (3, 2, 5, 4). La hauteur des articulations (78) est telle que la projection de l'axe de rotation de l'arbre (39) sur le plan de la figure 6 et les projections des axes de rotation d'une articulation (78) de gauche et d'une articulation (78) de droite sur le même plan de la figure 6 sont sensiblement alignées sur une même droite sensiblement horizontale lorsque les bielles (32, 31, 30, 29) des articulations (78) gauche et droite considérées sont au point mort de leur mouvement.

Cet agencement permet d'équilibrer intrinsèquement au dispositif bielles-excentriques la partie des bielles (32, 31, 30, 29) considérée comme avant un mouvement alternatif.

De plus, en observant simultanément les figures 2 et 6, on remarque que les excentriques (41, 42, 43, 44) sont répartis de façon équilibrée sur les 360 degrés de la rotation de l'arbre (39). C'est-à-dire que si on prend l'excentrique (41) comme référence, l'excentrique (43) en est déphasé de 90 degrés tandis que l'excentrique (42) est déphasé 90 degrés par rapport à l'excentrique (43), donc son déphasage par rapport à (41) est de 180 degrés. Les deux excentriques voisins (41, 42) sont donc en opposition de phase. Leurs déséquilibres propres s'annulent donc vis-à-vis de l'ensemble du dispositif. Il en va de même pour la paire d'excentriques (43, 44) car l'excentrique (44) est déphasé de 90 degrés par rapport à l'excentrique (42) qui, comme dit plus haut, a lui-même un déphasage de 90 degrés par rapport à l'excentrique (43).

Cet agencement, en plus de la réalisation de l'équilibrage dynamique et statique des masses rotatives constituées par les excentriques (41, 42, 43, 44) et la partie des bielles (32, 31, 30, 29) considérée comme avant un mouvement de rotation, permet d'obtenir une plus grande régularité du couple à transmettre à la machine pour son animation.

Le dispositif constitué par l'arbre d'entrée (39) et les excentriques (41, 42, 43, 44) est soutenu par le palier (40). Ce palier est lié par des moyens de fixation (80) à une traverse (81) s'étendant entre les deux poutres (22, 23) du châssis (1), parallèlement à la direction d'avance (24). Cette traverse (81) contribue également à la rigidité du châssis (1). On voit aussi dans la figure 6 que l'extrémité (82) de chaque barre à dents (2, 3, 4, 5) a une forme apte à collaborer avec celle en vis-à-vis sur la barre à dents adjacente de la même rangée (27, 28) afin de repousser, dans toutes les directions, les objets qui se trouvent entre les extrémités (82) quand elles se rapprochent l'une de l'autre. Préférentiellement et tel que celà est représenté, les formes des extrémités (82) en vis-à-vis ont chacune un sommet (83) en vue du dégagement des pierres se trouvant entre deux barres à dents (2, 3, 4, 5). Avantageusement, la forme de l'extrémité (82) d'une barre à dents (2, 3, 4, 5) est conique. Les machines de travail du sol selon la présente invention et telles qu'elles sont décrites dans les figures 1, 2, 3, 4, 5 et 6, fonctionnent comme décrit ci-après.

La machine de travail du sol est fixée au véhicule tracteur (13) par le dispositif d'attelage (12) solidaire du châssis (1) qui se trouve être l'ossature de la machine. A ce châssis (1) sont suspendus, par les bras oscillants (6, 7), les barres à dents (2, 3, 4, 5) transversalement à la direction d'avance (24) du travail.

Les bras oscillants (6, 7) étant fixés d'une part au châssis (1) et d'autre part aux barres à dents (2, 3, 4, 5) par des articulations cylindriques élastiques (63, 64, 66 ; 71, 72, 73), lesdites barres à dents (2, 3, 4, 5) peuvent donc avoir un mouvement pendulaire de faible amplitude de part et d'autre de leur position d'équilibre.

A l'avant de la machine, se trouve l'arbre d'entrée (39) qui est lié à la prise de force du véhicule tracteur (13) par l'intermédiaire d'un arbre à joints universels transmettant le mouvement de rotation de cette prise de force à l'arbre d'entrée (39).

Sur cet arbre d'entrée (39) soit montés les excentriques (41, 42, 43, 44). L'ensemble arbre d'entrée (39)-excentriques (41, 42, 43, 44) forme un dispositif similaire à un vilbrequin. Sur chacun de ces excentriques (41, 42, 43, 44) sont montées par leur tête les bielles (32, 31, 30, 29), leur pied étant articulé respectivement sur les chapes (79) solidaires des barres à dents (3, 2, 5, 4). Le dispositif à bielles-excentriques (10) ainsi créé, transforme le mouvement de rotation reçu par l'arbre d'entrée (39) en mouvement de va-et-vient alternatif transmis par les pieds des bielles (32, 31, 30, 29) respectivement aux barres à dents (3, 2, 5, 4).

Sur les barres à dents (3, 2, 5, 4) sont montées des dents (11) pénétrant dans le sol par leur extrémité inférieure et qui, par leur mouvement de va-et-vient alternatif transversal à la direction d'avance (24) au travail, travaillent le sol et brisent les mottes de terre s'y trouvant.

Le rouleau de soutien avant (36) est réglable en hauteur grâce à son dispositif de liaison (37). Ce réglage permet de contrôler la pénétration des dents (11) dans le sol et ainsi d'avoir la profondeur de travail que l'on souhaite. Ce rouleau de soutien (36), en roulant sur le sol, a aussi, de par sa largeur, un second rôle qui est d'égaliser le sol avant le passage de la machine en éliminant les traces des roues (14, 15) que le véhicule tracteur (13) laisse derière lui.

Le rouleau de nivellement (34), de par ses bras de liaison (35) flottant en hauteur, reste donc toujours au niveau du sol et son rôle est de retasser la terre et de l'égaliser après le travail des dents (11) en roulant sur le sol.

Par contre, la machine de travail du sol décrite à la figure 4 n'a pas de rouleau de soutien avant (36). En effet, c'est le rouleau de nivellement arrière (45) qui, en plus de son rôle de nivellement comparable à celui du rouleau (34) décrit ci-dessus, a un rôle de soutien de la machine et de contrôle de la profondeur de travail des dents (11).

Dans cette configuration, le rouleau (45) peut soutenir la machine de travail du sol car ses deux tras (35), lorsque la machine pénètre dans le sol, arrivent chacun en butée vers le haut sur la broche (59) placée dans un des trous (46) en fonction de la profondeur de travail que l'on désire.

## Revendications

1. Machine de travail du sol comportant d'une part un châssis (1) muni d'un dispositif d'attelage (12) à un véhicule moteur (13), châssis (1) auquel sont liées par une pluralité de bras oscillants (7 ; 6) deux rangées (27 ; 28) comportant chacune deux barres (2, 3 ; 4, 5) munies d'outils (11), lesdites barres (2, 3 ; 4, 5) étant au moins sensiblement alignées et à mouvements opposés, lesdites rangées (27 ; 28) étant, compte tenu du sens d'avance (24) au travail, disposées l'une derrière l'autre et transversalement à la direction d'avance (24) au travail, et d'autre part un mécanisme de transformation du mouvement rotatif reçu d'une source motrice en un mouvement de va-et-vient transversal à la direction d'avance (24) au travail, comportant un dispositif à bielles-excentriques (10), chaque bielle (31, 32 ; 29, 30) servant à transmettre le mouvement de va-et-vient à la barre (2, 3 ; 4, 5) correspondante à laquelle elle est liée directement ou indirectement par une de ses extrémités, chaque bras oscillant (7 ; 6) étant lié au châssis (1) au moyen d'une articulation supérieure (61, 62, 63, 64, 66) et à la barre (2, 3 ; 4, 5) correspondante au moyen d'une articulation inférieure (69, 68, 71, 72, 73), caractérisée par le fait que les articulations supérieures (61, 62, 63, 64, 66) d'au moins une paire de bras oscillants (7 ; 6) correspondants de deux barres (2, 4 ; 3, 5) respectives sur des rangées (27, 28) différentes s'étendent l'une à côté de l'autre, machine vue suivant la direction d'avance (24) au travail, et que le bras oscillant (6) de ladite paire, lié à une barre (4, 5) de la rangée arrière (28), a son articulation inférieure (69, 68, 71, 72, 73) décalée vers l'arrière par rapport à son articulation supérieure (61, 62, 63, 64, 66), tandis que le bras oscillant (7) de ladite paire, lié à une barre (2, 3) de la rangée avant (27), a son articulation inférieure (69, 68, 71, 72, 73) décalée vers l'avant par rapport à son articulation supérieure (61, 62, 63, 64, 66).

2. Machine de travail du sol selon la revendication 1, caractérisée par le fait que lesdites articulations supérieures (61, 62, 63, 64, 66) d'au moins une paire de bras oscillants (7 ; 6) correspondants de deux barres (2, 4 ; 3, 5) respectives sur des rangées (27 ; 28) différentes, s'étendent dans le voisinage l'une de l'autre.

3. Machine de travail du sol selon la revendication 1 ou 2, caractérisée par le fait qu'au moins une paire de bras oscillants correspondants (7, 6) de deux barres (2, 4 ; 3, 5) respectives sur des rangées (27, 28) différentes s'étendent l'un à côté de l'autre, machine vue suivant la direction d'avance (24) au travail.

4. Machine de travail du sol selon l'une au moins des revendications 1 à 3, caractérisée par le fait que les bras oscillants (7 ; 6) d'une même barre (2, 3 ; 4, 5) sont relativement éloignés l'un de l'autre.

5. Machine de travail du sol selon l'une au moins des revendications 1 à 4, caractérisée par le fait qu'en vue de côté, les âmes (74 ; 741) des bras oscillants (6 ; 7) de ladite paire apparaissent comme sécantes à leur partie supérieure.

6. Machine de travail du sol selon la revendication 5, caractérisée par le fait que le point d'intersection inférieur apparent (75) des âmes (74 ; 741) des bras oscillants (6 ; 7) de ladite paire est situé le plus haut possible par rapport aux barres (4, 5 ; 2, 3).

7. Machine de travail du sol selon la revendication 5 ou 6, caractérisée par le fait que l'âme (74 ; 741) des bras oscillants (6 ; 7) de ladite paire est plus large dans sa partie supérieure que dans sa partie inférieure.

8. Machine de travail du sol selon l'une au moins des revendications 1 à 7, caractérisée par le fait que le châssis (1) s'étend plus haut que les articulations supérieures (61, 62, 63, 64, 66) des bras oscillants (6 ; 7).

9. Machine de travail du sol selon l'une au moins des revendications 1 à 7, caractérisée par le fait que le châssis (1) s'étend plus bas que les articulations supérieures (61, 62, 63, 64, 66) des bras oscillants (6 ; 7).

10. Machine de travail du sol selon la revendication 8 ou 9, caractérisée par le fait que la largeur (76) du châssis (1), considéré dans la direction d'avance (24) au travail, est sensiblement égale à la distance (77) mesurée dans la direction d'avance (24) au travail entre les extrémités extérieures des articulations inférieures (69, 68, 71, 72, 73) des bras oscillants (6 ; 7) de ladite paire.

11. Machine de travail du sol selon l'une au moins des revendications 8 à 10, caractérisée par le fait que ledit châssis (1) est constitué d'une poutre unique (57).

12. Machine de travail du sol selon l'une au moins des revendications 8 à 10, caractérisée par le fait que le châssis (1) est constitué de deux poutres (22, 23).

13. Machine de travail du sol selon les revendications 9 et 12, caractérisée par le fait que lesdits bras oscillants (6 ; 7) s'étendent entre les deux poutres (22, 23).

14. Machine de travail du sol selon l'une au moins des revendications 1 à 13, caractérisée par le fait que la largeur de l'articulation supérieure (61, 62, 63, 64, 66) de chaque bras oscillant (6 ; 7) de ladite paire est sensiblement égale à la distance (77) mesurée dans la direction d'avance (24) au travail entre les extrémités extérieures des articulations inférieures (69, 68, 71, 72, 73) des bras oscillants (6 ; 7) de ladite paire.

15. Machine de travail du sol selon l'une au moins des revendications 1 à 14, caractérisée par le fait que l'articulation supérieure (61, 62, 63, 64, 66) et l'articulation inférieure (69, 68, 71, 72, 73) de chaque bras oscillant (6 ; 7) de ladite paire comportent au moins un palier élastique (63, 64, 66 ; 71, 72, 73).

16. Machine de travail du sol selon la revendication 15, caractérisée par le fait que l'articulation supérieure (61, 62, 63, 64, 66) d'un bras oscillant (6 ; 7) comporte un axe (62) solidaire du châssis (1), qui traverse au moins un palier élastique (63, 64, 66) constitué d'un tube intérieur (63) et d'un tube extérieur (64) liés entre eux par un cylindre élastique (66), ledit tube intérieur (63) étant monté serré sur l'axe (62) et ledit tube extérieur (64) étant monté serré dans un organe tubulaire supérieur (60) du bras oscillant (6 ; 7), et que l'articulation inférieure (69, 68, 71, 72, 73) dudit bras oscillant (6 ; 7) comporte un axe (68) solidaire de la barre (4, 5 ; 2, 3) correspondante, qui traverse au moins un palier élastique (71, 72, 73) constitué d'un tube intérieur (71) et d'un tube extérieur (72) liés entre eux par un cylindre élastique (73), ledit tube intérieur (71) étant monté serré sur l'axe (68) et ledit tube extérieur (72) étant monté serré dans un organe tubulaire inférieur (67) du bras oscillant (6 ; 7).

17. Machine de travail du sol selon la revendication 16, caractérisée par le fait que l'articulation supérieure (61, 62, 63, 64, 66) et l'articulation inférieure (69, 68, 71, 72, 73) de chaque bras oscillant (6 ; 7) de la paire comportent chacune deux paliers élastiques (63, 64, 65 ; 71, 72, 73) montés chacun près d'une extrémité de l'organe tubulaire supérieur (60), respectivement de l'organe tubulaire inférieur (67) dudit bras oscillant (6 ; 7).

18. Machine de travail du sol selon l'une au moins des revendications 1 à 17, caractérisée par le fait que le châssis (1) est muni d'un capot (33) qui, en vue de dessus, couvre totalement ou partiellement lesdites articulations supérieures (61, 62, 63, 64, 66) des bras oscillants (6 ; 7) et, éventuellement, ledit dispositif à bielles-excentriques (10).

**Claims**

1. A soil cultivation machine comprising on the one hand a chassis (1) equipped with a device (12) for coupling to a motor vehicle (13), chassis (1) to which are connected, by a plurality of oscillating arms (7; 6), two rows (27; 28) each comprising two bars (2, 3; 4, 5) equipped with tools (11), said bars (2, 3; 4, 5) being at least substantially aligned and having phase opposed movement, where said rows (27; 28), taking into consideration the direction of advance (24) during work, are arranged one behind another and transversely to the direction of advance (24) during work, and comprising on the other hand a mechanism for transforming the rotary movement received from a power source into a reciprocating movement transverse to the direction of advance (24) during work, comprising an eccentric rod device (10), where each rod (31, 32; 29, 30) serves to transmit the reciprocating movement to the corresponding bar (2, 3; 4, 4), to which it is connected directly or indirectly by one of its ends, where each oscillating arm (7;6) is connected to the chassis (1) by means of an upper joint (61, 62, 63, 64, 66) and to the corresponding bar (2, 3; 4, 5) by means of a lower joint (69, 68, 71, 72, 73), characterised in that the upper joints (61, 62, 63, 64, 66) of at least one pair of corresponding oscillating arms (7; 6) of two respective bars (2, 4; 3, 5) of different rows (27, 28) extend one beside another when said machine is viewed in accordance with the direction of advance (24) during work, and that the lover joint (69, 68, 71, 72, 73) of the oscillating arm (6) of the said pair, connected to a bar (4, 5) of the rear row (28), is rearwardly offset with respect to the upper joint (61, 62, 63, 64, 66) of said oscillating arm (6), whereas the lower joint (69, 68, 71, 72, 73) of the oscillating arm (7) of the said pair, connected to a bar (2, 3) of the front row (27), is forwardly offset with respect to the upper joint (61, 62, 63, 64, 66) of said oscillating arm (7).

2. A soil cultivation machine as claimed in Claim 1, characterised in that the said upper joints (61, 62, 63, 64, 66) of at least one pair of corresponding oscillating arms (7; 6) of two respective bars (2, 4; 3, 5) of different rows (27; 28) extend into the vicinity of one another.

3. A soil cultivation machine as claimed in Claim 1 or 2, characterised in that at least one pair of corresponding oscillating arms (7, 6) of two respective bars (2, 4; 3, 5) of different rows (27, 28) extend one beside another when said machine is viewed in accordance with the direction of advance (24) during work.

4. A soil cultivation machine as claimed in at least one of Claims 1 to 3, characterised in that the oscillating arms (7; 6) of one and the same bar (2, 3; 4, 5) are relatively spaced from one another.

5. A soil cultivation machine as claimed in at least one of Claims 1 to 4, characterised in that when viewed from the side, the cores (74; 741) of the oscillating arms (6; 7) of the said pair appear to intersect in their upper part.

6. A soil cultivation machine as claimed in Claim 5, characterised in that the apparent lower point of intersection (75) of the cores (74; 741) of the oscillating arms (6; 7) of the said pair is located as high as possible with respect to the bars (4, 5; 2, 3).

7. A soil cultivation machine as claimed in Claim 5 or 6, characterised in that the core (74; 741) of the oscillating arms (6; 7) of the said pair is wider in its upper part than in its lower part.

8. A soil cultivation machine as claimed in at least one of Claims 1 to 7, characterised in that the chassis (1) extends higher than the upper joints (61, 62, 63, 64, 66) of the oscillating arms (6; 7).

9. A soil cultivation machine as claimed in at least one of Claims 1 to 7, characterised in that the chassis (1) extends lower than the upper joints (61, 62, 63, 64, 66) of the oscillating arms (6; 7).

10. A soil cultivation machine as claimed in Claim 8 or 9, characterised in that the width (76) of the chassis (1), viewed in the direction of advance (24) during work, is substantially equal to the distance (77), measured in the direction of advance (24) during work, between the outer ends of the lower joints (69, 68, 71, 72, 73) of the oscillating arms (6; 7) of the said pair.

11. A soil cultivation machine as claimed in at least one of Claims 8 to 10, characterised in that the said chassis (1) is formed by one single beam (57).

12. A soil cultivation machine as claimed in at least one of Claims 8 to 10, characterised in that the chassis (1) is formed by two beams (22, 23).

13. A soil cultivation machine as claimed in Claims 9 and 12, characterised in that the said oscillating arms (6; 7) extend between the two beams (22, 23).

14. A soil cultivation machine as claimed in at least one of Claims 1 to 13, characterised in the the width of the upper joint (61, 62, 63, 64, 66) of each oscillating arm (6; 7) of the said pair is substantially equal to the distance (77), measured in the direction of advance (24) during work, between the outer ends of the lower joints (69, 68, 71, 72, 73) of the oscillating arms (6; 7) of the said pair.

15. A soil cultivation machine as claimed in at least one of Claims 1 to 14, characterised in that the upper joint (61, 62, 63, 64, 66) and the lower joint (69, 68, 71, 72, 73) of each oscillating arm (6; 7) of the said pair comprise at least one flexible bearing (63, 64, 66; 71, 72, 73).

16. A soil cultivation machine as claimed in Claim 15, characterised in that the upper joint (61, 62, 63, 64, 66) of an oscillating arm (6; 7) comprises a pivot pin (62) which is integrally connected to the chassis (1) and which passes through at least one flexible bearing (63, 64, 66) which is formed by an inner tube (63) and an outer tube (64) connected to one another by a flexible cylinder (66), said inner tube (63) being clamped on the pivot pin (62) and said outer tube (64) being clamped in an upper tubular element (60) of the oscillating arm (6; 7), and that the lower joint (69, 68, 71, 72, 73) of the said oscillating arm (6; 7) comprises a pivot pin (68), which is integrally connected to the corresponding bar (4, 5; 2, 3) and which passes through at least one flexible bearing (71, 72, 73) formed by an inner tube (71) and an outer tube (72), which are connected to one another by a flexible cylinder (73), said inner tube (71) being clamped on the pivot pin (68) and said outer tube (72) being clamped in a lower tubular element (67) of the oscillating arm (6; 7).

17. A soil cultivation machine as claimed in Claim 16, characterised in that the upper joint (61, 62, 63, 64, 66) and the lower joint (69, 68, 71, 72, 73) of each oscillating arm (6; 7) of the pair each comprises two flexible bearings (63, 64, 65; 71, 72, 73) each mounted close to a respective end of the upper tubular element (60), respectively of the lower tubular element (67) of the said oscillating arm (6; 7).

18. A soil cultivation machine as claimed in at least one of Claims 1 to 17, characterised in that the chassis (1) is equipped with a hood (33) which, viewed from above, either totally or partially covers the said upper joints (61, 62, 63, 64, 66) of the oscillating arms (6; 7) and possibly the said eccentric rod device (10).

## Patentansprüche

1. Bodenbearbeitungsmaschine, die einerseits einen Rahmen (1), der mit einer Vorrichtung (12) zum Anbau an ein Motorfahrzeug (13) versehen ist, mit welchem Rahmen (1) über mehrere hinund hergehende Arme (7; 6) zwei Reihen (27; 28), umfassend jeweils zwei mit Werkzeugen (11) versehene Stangen (2, 3; 4, 5), welche Stangen (2, 3; 4, 5) zumindest im wesentlichen in einer Reihe stehen und sich entgegengesetzt bewegen, wobei die Reihen (27; 28) in Fortbewegungsrichtung (24) im Betrieb hintereinander und quer zur Fortbewegungsrichtung (24) im Betrieb angeordnet sind, verbunden sind, und anderseits einen Mechanismus zur Umwandlung der von einer Antriebsquelle empfangenen Drehbewegung in eine quer zur Fortbewegungsrichtung (24) im Betrieb pendelnde Bewegung aufweist, umfassend eine Einrichtung mit Exzentergliedern (10), wobei jedes Glied (31, 32; 29, 30) dazu dient, die pendelnde Bewegung auf die entsprechende Stange (2, 3; 4, 5), mit der es direkt oder indirekt über eines seiner Enden verbunden ist, zu übertragen, wobei jeder pendelnder Arm (7; 6) mit dem Rahmen (1) mittels eines oberen Gelenks (61, 62, 63, 64, 66) und an der entsprechenden Stange (2, 3; 4, 5) mittels eines unteren Gelenks (69, 68, 71, 72, 73) verbunden ist, dadurch gekennzeichnet, daß sich die oberen Gelenke (61, 62, 63, 64, 66) zumindest eines Paares entsprechender pendelnde Arme (7; 6) zweier jeweiliger Stangen (2, 4; 3, 5) auf verschiedenen Reihen (27, 28) nebeneinander erstrecken, wenn die Maschine in Fortbewegungrichtung (24) im Betrieb betrachtet wird, und daß das untere Gelenk (69, 60, 71, 72, 73) des pendelnden Armes (6) des Paares, der mit einer Stange (4, 5) der hinteren Reihe (28) verbunden ist, nach hinten in bezug auf sein oberes Gelenk (61, 62, 63, 64, 66) versetzt ist, während das untere Gelenk (69, 68, 71, 72, 73) des pendelnden Armes (7) des Paares, das mit einer Stange (2, 3) der vorderen Reihe (27) verbunden ist, nach vorne in bezug auf sein oberes Gelenk (61, 62, 63, 64, 66) versetzt ist.

2. Bodenbearbeitungsmaschine nach Anspruch 1, dadurch gekennzeichnet, daß sich die oberen Gelenke (61, 62, 63, 64, 66) zumindest eines Paares entsprechender pendelnder Arme (7; 5) der jeweiligen beiden Stangen (2, 4; 3, 5) auf den verschiedenen Reihen (27; 28) in ihre gegenseitige Nähe erstrecken.

3. Bodenbearbeitungsmaschine nach Anspruch 1 oder 2 dadurch gekennzeichnet, daß sich zumindest ein Paar der entsprechenden pendelnden Arme (7, 6) von zwei jeweiligen Stangen (2, 4; 3, 5) auf verschiedenen Reihen (27, 28) nebeneinander erstreckt, wenn die Maschine in Fortbewegungsrichtung (24) im Betrieb betrachtet wird.

4. Bodenbearbeitungsmaschine nach zumindest einem der Ansprüche 1 bis 3, dadurch gekennzeichnet, daß die pendelnden Arme (7; 6) ein und derselben Stange (2, 3; 4, 5) relativ entfernt voneinander sind.

5. Bodenbearbeitungsmaschine nach zumindest einem der Ansprüche 1 bis 4, dadurch gekennzeichnet, daß sich die Innenräume (74; 741) der pendelnden Arme (6; 7) des Paares in Seitenansicht an ihrem Oberteil zu überschneiden scheinen.

6. Bodenbearbeitungsmaschine nach Anspruch 5, dadurch gekennzeichnet, daß der scheinbare untere Schnittpunkt (75) der Innenräume (74; 741) der pendelnden Arme (6; 7) des Paares so hoch wie möglich in bezug auf die Stangen (4, 5; 2, 3) liegt.

7. Bodenbearbeitungsmaschine nach Anspruch 5 oder 6, dadurch gekennzeichnet, daß der Innenraum (74; 741) der pendelnden Arme (6; 7) des Paares im Oberteil größer als im Unterteil ist.

8. Bodenbearbeitungsmaschine nach zumindest

einem der Ansprüche 1 bis 7, dadurch gekennzeichnet, daß der Rahmen (1) weiter nach oben reicht als die oberen Gelenke (61, 62, 63, 64, 66) der pendelnden Arme (6; 7).

9. Bodenbearbeitungsmaschine nach zumindest einem der Ansprüche 1 bis 7, dadurch gekennzeichnet, daß daß der Rahmen (1) weiter nach unten reicht als die oberen Gelenke (61, 62, 63, 64, 66) der pendelnden Arme (6; 7).

10. Bodenbearbeitungsmaschine nach Anspruch 8 oder 9, dadurch gekennzeichnet, daß die Breite (76) des Rahmens (1), in Fortbewegungsrichtung (24) im Betrieb gesehen, im wesentlichen gleich dem in Fortbewegungsrichtung (24) im Betrieb gemessenen Abstand (77) zwischen den äußeren Enden der unteren Gelenke (69, 68, 71, 72, 73) der pendelnden Arme (6; 7) des Paares ist.

11. Bodenbearbeitungsmaschine nach zumindest einem der Ansprüche 8 bis 10, dadurch gekennzeichnet, daß der Rahmen (1 ) aus einem einzigen Trager (57) besteht.

12. Bodenbearbeitungsmaschine nach zumindest einem der Ansprüche 8 bis 10, dadurch gekennzeichnet, daß der Rahmen (1) aus zwei Trägern (22, 23) besteht.

13. Bodenbearbeitungsmaschine nach den Ansprüchen 9 und 12. dadurch gekennzeichnet, daß sich die pendelnden Arme (6; 7) zwischen den beiden Trägern (22, 23) erstrecken.

14. Bodenbearbeitungsmaschine nach zumindest einem der Ansprüche 1 bis 13, dadurch gekennzeichnet, daß die Breite des oberen Gelenkes(61, 62, 63, 64, 66) jedes pendelnde Armes (6; 7) des Paares im wesentlichen gleich dem in Fortbewegungsrichtung (24) im Betrieb gemessenen Abstand (77) zwischen den äußeren Enden der unteren Gelenke (69, 68, 71, 72, 73) der pendelnden Arme (6; 7) des Paares ist.

15. Bodenbearbeitungsmaschine nach zumindest einem der Ansprüche 1 bis 14, dadurch gekennzeichnet, daß das obere Gelenk (61, 62, 63, 64, 66) und das untere Gelenk (69, 68, 71, 72, 73) jedes pendelnden Armes (6; 7) des Paares zumindest ein elastisches Lager (63, 64, 66; 71, 72, 73) umfassen.

16. Bodenbearbeitungsmaschine nach Anspruch 15, dadurch gekennzeichnet, daß das obere Gelenk (61, 62, 63, 64, 66) eines pendelnden Armes (6; 7) eine mit dem Rahmen (1) fest verbundene Achse (62) umfaßt, die zumindest ein elastisches Lager (63, 64, 66), bestehend aus einem Innenrohr (63) und einem Außenrohr (64), die miteinander durch einen elastischen Zylinder (66) verbunden sind, durchsetzt, wobei das Innenrohr (63) auf die Achse (62) gepreßt ist und das Außenrohr (64) in ein oberes rohrförmiges Organ (60) des pendelnden Armes (6; 7) gepreßt ist, und das untere Gelenk (69, 68, 71, 72, 73) des pendelnden Armes (6; 7) eine mit der entsprechenden stange (4, 5; 2, 3) fest verbundene Achse (68) umfaßt, die zumindest ein elastisches Lager (71, 72, 73), bestehend aus einem Innenrohr (71) und einem Außenrohr (72), die miteinander durch einen elastischen Zylinder (73) verbunden sind, durchsetzt, wobei das Innenrohr (71) auf die Achse (68) gepreßt ist und das Außenrohr (72) in ein unteres rohrförmiges Organ (67) des pendelnden Armes (6; 7) gepreßt ist.

17. Bodenbearbeitungsmaschine nach Anspruch 16, dadurch gekennzeichnet, daß das obere Gelenk (61, 62, 63, 64, 66) und das untere Gelenk (69, 68, 71, 72, 73) jedes pendelnden Armes (6; 7) des Paares jeweils zwei elastische Lager (63, 64, 65; 71, 72, 73) umfaßt, die jeweils nahe einem Ende des oberen rohrförmigen Organs (60) bzw. des unteren rohrförmigen Organs (67) des pendelnden Armes (6; 7) befestigt sind.

18. Bodenbearbeitungsmaschine nach zumindest einem der Ansprüche 1 bis 17, dadurch gekennzeichnet, daß der Rahmen (1) mit einer Haube (33) versehen ist, die in Draufsicht die oberen Gelenke (61 62, 63, 64, 66) der pendelnden Arme und gegebenenfalls die Einrichtung mit Exzentergliedern (10) vollständig oder teilweise bedeckt.

Fig.1

14

**Fig. 2**

EP 0 268 540 B1

Fig. 3

Fig. 4

~52~

54
53
56
55
25
46
59
45
35
47
44
43
1
57
42
41
10
39
58
26
4
6
2
7
11
24

EP 0 268 540 B1

Fig. 5

**Fig: 6**

EP 0 268 540 B1